# EUROPEAN PATENT APPLICATION

(11) **EP 3 024 173 A1**
(43) Date of publication of application: **25.05.2016**
(21) Application number: 15195207.4
(22) Date of filing: 18.11.2015
(51) Int. Cl.: H04L 12/18

(54) **MESSAGE TRANSMISSION SYSTEM, MESSAGE TRANSMISSION SERVER, USER TERMINAL APPARATUS, METHOD FOR TRANSMITTING MESSAGE, AND METHOD FOR RECEIVING MESSAGE**

(30) Priority: 24.11.2014 KR 20140164353
(71) Applicant: Samsung Electronics Co., Ltd., Gyeonggi-do 16677 (KR)
(72) Inventor: KANG, Kyoung-ku, Gyeonggi-do (KR); LEE, Dae-hyun, Gyeonggi-do (KR); SO, Young-ho, Gyeonggi-do (KR); MYUNG, Kyung-sik, Gyeonggi-do (KR)
(74) Representative: Appleyard Lees IP LLP

(57) **Abstract**

A message transmission system, a message transmission server, a user terminal apparatus, a method for transmitting a message, and a method for receiving a message are provided. The message transmission system includes a message transmission server configured to select a channel server to broadcast an input message, based on the input message, and transmit the input message; and a selected channel server configured to receive the message transmitted by the message transmission server, and broadcast the transmitted message to a terminal apparatus.

## Description

### CROSS-REFERENCE TO RELATED APPLICATION

This application claims priority from Korean Patent Application No. 10-2014-0164353, filed on November 24, 2014, in the Korean Intellectual Property Office, the disclosure of which is incorporated herein by reference in its entirety.

### BACKGROUND

### 1. Field

Apparatuses and methods consistent with exemplary embodiments relate to a message transmission system, a message transmission server, a user terminal apparatus, a method for transmitting a message, and a method for receiving a message.

### 2. Description of the Related Art

A push service is performed by a service provider to transmit a message or a notification signal to a terminal apparatus that satisfies a condition. To provide the push service, a service providing server may manage information on terminal apparatuses that receive the service, classify messages, and provide the messages to appropriate terminal apparatuses.

However, such a related-art message providing service may have difficulty in managing information on all terminal apparatuses when a number of terminal apparatuses that receive the service increases. In addition, transmitting messages to respective terminal apparatuses may cause a system load, and thus reduce a total system speed. Therefore, because a quality of service may be degraded and a user may not receive the service at a proper time, the service may be degraded.

Therefore, there is a demand for a method for providing a message providing service to a plurality of client terminals efficiently and rapidly.

### SUMMARY

Exemplary embodiments address at least the above disadvantages and other disadvantages not described above. Also, the exemplary embodiments are not required to overcome the disadvantages described above, and may not overcome any of the problems described above.

Exemplary embodiments provide a method for providing a message providing service to a plurality of client terminals efficiently and rapidly.

According to an aspect of an exemplary embodiment, there is provided a message transmission system including a message transmission server configured to select a channel server to broadcast an input message, based on the input message, and transmit the input message; and a selected channel server configured to receive the message transmitted by the message transmission server, and broadcast the transmitted message to a terminal apparatus.

The message transmission server may be configured to select the channel server to broadcast the input message, based on channel information included in the input message.

The message transmission system may further include an external apparatus configured to transmit the input message to the message transmission server.

The message transmission system may further include an address server configured to receive terminal information of the terminal apparatus from the terminal apparatus, and set channel information based on the received terminal information.

The selected channel server may correspond to the set channel information.

The terminal information may include any one or any combination of location information of the terminal apparatus, device information of the terminal apparatus, information of an application installed in the terminal apparatus, setting information of the terminal apparatus, user information of the terminal apparatus, and log information of the terminal apparatus.

The address server may be configured to in response to the channel information corresponding to the received terminal information being pre-set, transmit the pre-set channel information to the terminal apparatus. The address server may be further configured to in response to the channel information corresponding to the received terminal information not being pre-set, set the channel information corresponding to the received terminal information, and transmit the set channel information to the terminal apparatus.

According to an aspect of another exemplary embodiment, there is provided a message transmission server including a communicator, an inputter configured to receive a message, and a controller configured to select a channel server to broadcast the received message, based on the received message, and control the communicator to transmit the received message to the selected channel server.

According to an aspect of another exemplary embodiment, there is provided a terminal apparatus including a communicator configured to transmit terminal information of the terminal apparatus to an address server, and receive, from the address server, channel information set based on the transmitted terminal information. The terminal apparatus further includes a controller configured to control the communicator to receive a message from a channel server corresponding to the received channel information.

The terminal apparatus may be one of a digital television, a smartphone, smart glasses, a smart watch, a cellular phone, a tablet personal computer, an MP3 player, a portable media computer, and a laptop computer.

According to an aspect of another exemplary embodiment, there is provided a method for transmitting a message in a message transmission system, the method including selecting , by a message transmission server, a channel server to broadcast an input message, based on the input message, transmitting, by a message transmission server, the input message to the selected channel server, and broadcasting, by the selected channel server, the transmitted message to a terminal apparatus.

The selecting the channel server may include selecting the channel server to broadcast the input message, based on channel information included in the input message.

The method may further include transmitting, by an external apparatus, the input message to the message transmission server.

The method may further include receiving, by an address server, terminal information of the terminal apparatus from the terminal apparatus, and setting, by the address server, channel information based on the received terminal information.

The setting the channel information may include in response to the channel information corresponding to the received terminal information being pre-set, transmitting the pre-set channel information to the terminal apparatus. The setting the channel information may further include in response to the channel information corresponding to the received terminal information not being pre-set, setting the channel information corresponding to the received terminal information, and transmitting the set channel information to the terminal apparatus.

According to an aspect of another exemplary embodiment, there is provided a method for transmitting a message in a message transmission server, the method including receiving a message, selecting a channel server to broadcast the received message, based on the received message, and transmitting the received message to the selected channel server.

According to an aspect of another exemplary embodiment, there is provided a method for receiving a message in a terminal apparatus, the method including transmitting terminal information of the terminal apparatus to an address server, receiving, from the address server, channel information set based on the transmitted terminal information, and receiving a message from a channel server corresponding to the received channel information.

According to an aspect of another exemplary embodiment, there is provided a server including an address server configured to receive terminal information of a terminal from the terminal, set the terminal in a group of terminals based on the received terminal information, the group configured to receive a message directed to the group, and transmit group information of the set group to the terminal.

The server may further include a message transmission server configured to receive the message from an external apparatus, determine whether the received message is directed to the set group, and transmit the received message to the set group in response to the received message being determined to be directed to the set group.

The message transmission server may be configured to establish a connection with the terminal in response to the group information being transmitted to the terminal.

The address server may be configured to set the terminal in the group in response to a feature of the group corresponding to a feature of the received terminal information.

### BRIEF DESCRIPTION OF THE DRAWINGS

The above and/or other aspects will be more apparent by describing in detail exemplary embodiments with reference to the accompanying drawings, in which:
FIG. 1 is a block diagram showing a configuration of a message transmission system according to an exemplary embodiment;
FIG. 2 is a block diagram showing a configuration of a message transmission system according to an exemplary embodiment;
FIG. 3 is a block diagram showing a configuration of a message transmission server according to an exemplary embodiment;
FIG. 4 is a block diagram showing a configuration of a user terminal apparatus according to an exemplary embodiment;
FIG. 5 is a view showing a configuration of message transmission system according to an exemplary embodiment;
FIGS. 6 to 12 are swimlane diagrams showing a message transmission process according to an exemplary embodiment;
FIGS. 13 and 14 are flowcharts showing a method for transmitting a message according to exemplary embodiments; and
FIG. 15 is a flowchart showing a method for receiving a message according to an exemplary embodiment.

### DETAILED DESCRIPTION OF EXEMPLARY EMBODIMENTS

Exemplary embodiments are described in more detail with reference to the accompanying drawings.

In the following description, like reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail because they would obscure the description with unnecessary detail.

It will be understood that the terms such as "unit", "-er (-or)", and "module" described in the specification refer to an element configured to perform at least one function or operation, and may be implemented in hardware or a combination of hardware and software.

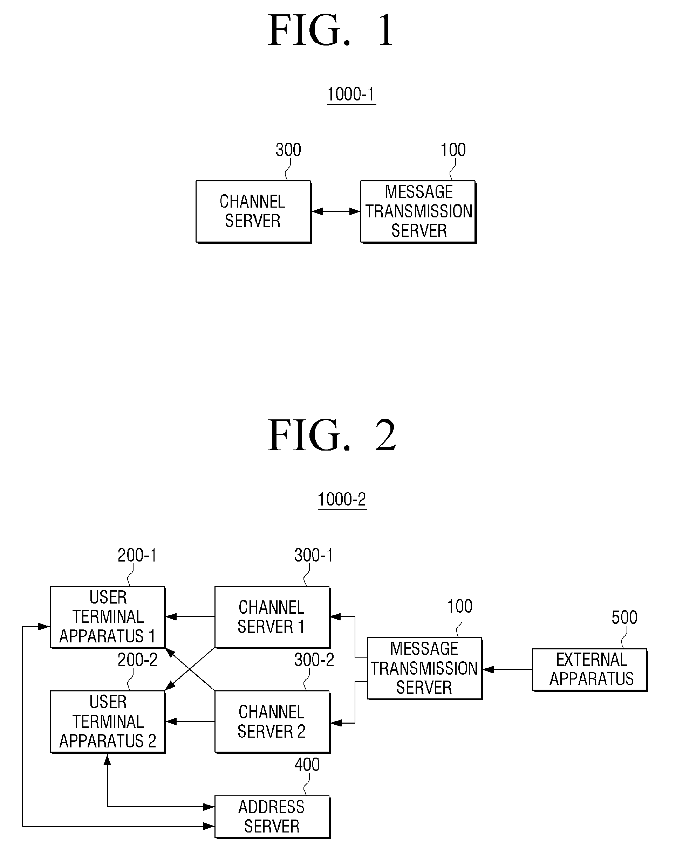

FIG. 1 is a block diagram showing a configuration of a message transmission system 1000-1 according to an exemplary embodiment.

Referring to FIG. 1, the message transmission system 1000-1 includes a message transmission server 100 and a channel server 300.

In response to a message being received, the message transmission server 100 is configured to select the channel server 300 to broadcast the received message, based on the received message, and transmit the received message to the selected channel server 300. In detail, in response to the message being received from an external apparatus or received through a user input, the message transmission server 100 selects the channel server 300 to broadcast the received message, based on channel information included in the received message. For example, when the channel information included in the received message indicates Korea, the message transmission server 100 selects the channel server 300 for Korea. The message transmission server 100 transmits the received message to the selected channel server 300.

The channel server 300 receives the message transmitted from the message transmission server 100, and broadcasts the message to a user terminal apparatus. A channel recited herein refers to a user terminal apparatus group that is classified by a predetermined feature. There may be a plurality of channels according to different features of user terminal apparatuses. For example, when the user terminal apparatuses are grouped by country, there may be channels for Korea, U.S., China, Japan, and the like. In addition, the user terminal apparatuses that subscribe to a push message through an application may be grouped into the same single channel. The channel server 300 broadcasts the message to a user terminal apparatus that belongs to a corresponding channel.

The exemplary embodiment can solve a server load problem that occurs when the same message is transmitted to a plurality of user terminal apparatuses, all the user terminal apparatuses are identified, and the message is transmitted in sequence. That is, because the user terminal apparatuses having a similar feature or subscribing to the same push message are included in the same channel, the message transmission server 100 is able to transmit the message to all the user terminal apparatuses connected to the channel server 300 by transmitting the message only to the channel server 300 corresponding to the same channel, so that a message transmission speed can be increased and the server load can be reduced.

FIG. 2 is a block diagram showing a configuration of a message transmission system 1000-2 according to an exemplary embodiment.

Referring to FIG. 2, the message transmission system 1000-2 includes a plurality of channel servers 300-1 and 300-2, a plurality of user terminal apparatuses 200-1 and 200-2, an address server 400, and an external apparatus 500 in addition to the above-described message transmission server 100.

The user terminal apparatuses 200-1 and 200-2 are connected to the channel servers 300-1 and 300-2 via wire or wireless communication, and are configured to receive a message. The user terminal apparatuses 200-1 and 200-2 are connected to the channel servers 300-1 and 300-2 to be able to subscribe to a push message.

To achieve this, the user terminal apparatuses 200-1 and 200-2 transmit terminal information to the address server 400. The terminal information includes information indicating the feature of the user terminal apparatuses 200-1 and 200-2. For example, the terminal information may include at least one of location information of the user terminal apparatuses 200-1 and 200-2, information of devices of the user terminal apparatuses 200-1 and 200-2, information of an application installed in the user terminal apparatuses 200-1 and 200-2, setting information of the user terminal apparatuses 200-1 and 200-2, user information of the user terminal apparatuses 200-1 and 200-2, and log information of the user terminal apparatuses 200-1 and 200-2.

The location information of the user terminal apparatuses 200-1 and 200-2 may include geographical location information of the user terminal apparatuses 200-1 and 200-2 detected by a location detection sensor, or at least one of country information and region information registered at the user terminal apparatuses 200-1 and 200-2. The information of the devices of the user terminal apparatuses 200-1 and 200-2 may include at least one of information of an operating system of the user terminal apparatuses 200-1 and 200-2, memory information, Central Processing Unit (CPU) information, communication module information, display resolution information, process information, and other specification information. The information of the application installed in the user terminal apparatuses 200-1 and 200-2 may include at least one of function module information supported by the operating system of the user terminal apparatuses 200-1 and 200-2, and information of an application newly installed by users. The setting information of the user terminal apparatuses 200-1 and 200-2 may include device setting information of the user terminal apparatuses 200-1 and 200-2. The user information of the user terminal apparatuses 200-1 and 200-2 may include personal information of the users of the user terminal apparatuses 200-1 and 200-2, and may include at least one of name, interest information, sex information, age information, address information, and job information. The log information of the user terminal apparatuses 200-1 and 200-2 may include at least one of location log data, touch screen log data, purchase log data, web site visit data, and broadcast reception data of the user terminal apparatuses 200-1 and 200-2.

The address server 400 sets channel information of the user terminal apparatuses 200-1 and 200-2 based on the terminal information described above, and transmits the set channel information to the user terminal apparatuses 200-1 and 200-2.

The user terminal apparatuses 200-1 and 200-2 establish connection with at least one of the channel servers 300 based on the received channel information. In this example, the user terminal apparatuses 200-1 and 200-2 are connected to both the channel servers 300-1 and 300-2. In response to a message being received from the message transmission server 100, the channel servers 300-1 and 300-2 transmit the received message to the user terminal apparatuses 200-1 and 200-2.

The address server 400 receives the terminal information from the user terminal apparatuses 200-1 and 200-2, and sets the channel information based on the received terminal information. When the channel information corresponding to the received terminal information is pre-set, the address server 400 transmits the pre-set channel information to the user terminal apparatuses 200-1 and 200-2. In this example, the address server 400 may include the terminal information of the user terminal apparatuses 200-1 and 200-2 in the pre-set channel information, and store the pre-set channel information in a storage. That is, the user terminal apparatuses 200-1 and 200-2 are set to subscribe to a message of a pre-set channel.

For example, when the received terminal information includes "Korea", the address server 400 includes the terminal information of the user terminal apparatuses 200-1 and 200-2 in Korean channel information, and stores the Korean channel information in the storage. The user terminal apparatuses 200-1 and 200-2 receive a message from the channel server 300 corresponding to the Korean channel.

On the other hand, when there is no channel information corresponding to the received terminal information, the address server 400 newly set the channel information corresponding to the received terminal information, and transmits the set channel information to the user terminal apparatuses 200-1 and 200-2.

For example, when there is no Korean channel, the address server 400 set the Korean channel, includes the terminal information of the user terminal apparatuses 200-1 and 200-2 in the Korean channel information, and stores the Korean channel information in the storage. In addition, the address server 400 transmits the Korean channel information to the user terminal apparatuses 200-1 and 200-2.

When the channel information is newly set, the address server 400 assigns a new channel server (e.g., the channel servers 300-1 and 300-2) to the newly set channel information. In addition, the address server 400 transmits the newly set channel information and information of the new channel server to the message transmission server 100.

Alternatively, the address server 400 may be configured as a single device along with the above-described message transmission server 100 and/or the channel server 300. That is, the message transmission server 100 and/or the channel server 300 may perform the operation of the address server 400.

As described above, the address server 400 according to an exemplary embodiment may dynamically add a channel. In addition, if the user terminal apparatuses 200-1 and 200-2 stop subscribing to the message and thus, there are no user terminal apparatuses 200-1 and 200-2 in the channel, the address server 400 may delete the channel.

The external apparatus 500 is configured to input a message to be transmitted to the user terminal apparatuses 200-1 and 200-2 through the message transmission server 100. The external apparatus 500 may be at least one of an external system and a manager server. When the external apparatus 500 is an external system, the external apparatus 500 may be a server that provides an online service through an application. In this example, a message that is generated in the server or input by a user may be transmitted to the message transmission server 100. When the external apparatus 500 is a manager server, a message may be input through a server or a terminal apparatus connected to the message transmission system 1000-2, and transmitted to the message transmission server 100.

Hereinafter, the configurations of the message transmission server 100 and the user terminal apparatus 200 will be explained.

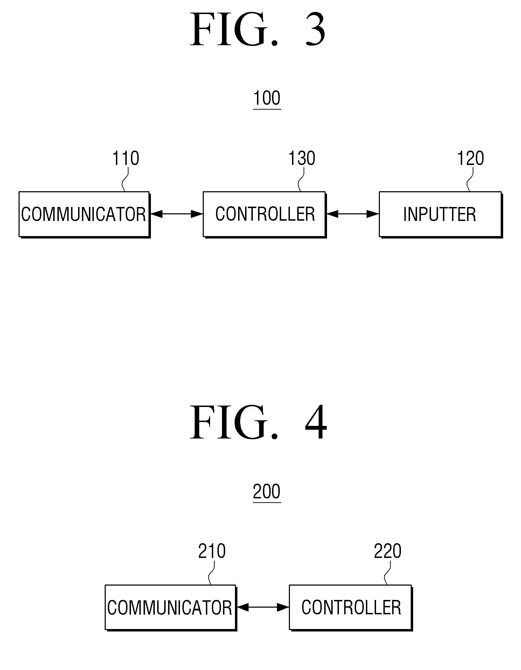

FIG. 3 is a block diagram showing a configuration of the message transmission server 100 according to an exemplary embodiment.

Referring to FIG. 3, the message transmission server 100 includes a communicator 110, an inputter 120, and a controller 130.

The communicator 110 is configured to communicate with the channel server 300. To achieve this, the communicator 110 may include a socket. The socket is a single communication object that is located at a contact point on communication connected to a network. Application programs generate a socket to communicate with a network, and exchange messages with one another through the socket.

The communicator 110 may include various wire or wireless communication modules. For example, the communicator 110 may include at least one of a Wi-Fi communication module, a third generation (3G) mobile communication module, a fourth generation (4G) a mobile communication module such as mobile Worldwide Interoperability for Microwave Access (WiMax) or Wireless Broadband (WiBro) module, a 4G Long Term Evolution (LTE) module, a short-distance communication module such as a Bluetooth module, an Infrared Data Association (IrDA) module, a Near Field Communication (NFC) module, a Zigbee module, and the like, a wireless Local Area Network (LAN) module, a wired LAN module, and the like.

The inputter 120 is configured to receive a message. For example, the inputter 120 may include at least one of a keyboard, a touch screen, a mouse, a proximity sensor, and other inputting devices for a user to input a message. Alternatively, the inputter 120 may include an interface for the external apparatus 500 that receives a message. That is, in response to a user input through the external apparatus 500, the inputter 120 may be configured to receive the user input from the external apparatus 500. In this example, the inputter 120 may include the above-described various communication modules. The message may be automatically generated without being input by the user. That is, the external apparatus 500 and the message transmission server 100 may automatically generate a message based on a pre-set rule. For example, the external apparatus 500 may generate an advertisement message at a predetermined time every week, and transmit the advertisement message to the corresponding channel server 300.

In response to the message being received, the controller 130 selects channel server 300 to broadcast the received message, based on the received message. In detail, the controller 130 controls the communicator 110 to receive information of the channel server 300 and channel information of the channel server 300 from the address server 400. In addition, in response to the message being received, the controller 130 analyzes channel information included in the received message, and selects the channel server 300 based on the analyzed channel information, i.e., the channel server 300 having the channel information that is the same as the analyzed channel information. In addition, the controller 130 controls the communicator 110 to transmit the received message to the selected channel server 300.

For example, the controller 130 may include a hardware configuration including a Micro Processing Unit (MPU) or a Central Processing Unit (CPU), a cache memory, a data bus, and the like, an operating system, and a software configuration of an application that performs the above-described operation. A control command for respective elements for the operation of the message transmission server 100 may be read from a memory according to a system clock, and an electric signal may be generated based on the read control command to operate the respective elements of hardware.

The above-described operation of the controller 130 may be included as a function of the operating system, or may be implemented as an application. When the operation of the controller 130 is included as a function of the operating system, the operating system shifts an instruction stored in a storage to the memory, performs memory scheduling, and processes a process based on a priority. When the operation of the controller 130 is implemented as an application, an application stored in the storage is executed and loaded into the memory, and the above-described operation is performed.

The message transmission server 100 may further include a storage. The storage may store the above-described channel information and the information of the channel server 300. The storage may be implemented as various technical devices. For example, the storage may be implemented as a high-capacity storage device, and stored information may be implemented as a database. The database may be, for example, one of a hierarchical database (HDB), a relational database (RDB), and an object-oriented database (OODB). When such information is acquired from the address server 400, the information may be implemented as a network database.

FIG. 4 is a block diagram showing a configuration of a user terminal apparatus 200 according to an exemplary embodiment.

Referring to FIG. 4, the user terminal apparatus 200 includes a communicator 210 and a controller 220.

The user terminal apparatus 200 may be implemented as various devices. For example, the user terminal apparatus 200 may be implemented as one of a digital television, a smartphone, a tablet personal computer (PC), a smart watch, a Portable Multimedia Player (PMP), an MP3 player, a Personal Digital Assistant (PDA), a cellular phone, a laptop computer, smart glasses, other mobile terminal devices, or an stationary terminal device.

The communicator 210 is configured to communicate with the address server 400 and the channel server 300. In detail, the communicator 210 transmits terminal information of the user terminal apparatus 200 to the address server 400, and receives channel information set based on the terminal information from the address server 400. In addition, the communicator 210 receives a message from the channel server 300. To achieve this, the communicator 210 may include a socket. The socket is a single communication object that is located at a contact point on communication connected to a network. Application programs generate a socket to communicate with a network, and exchange messages with one another through the socket.

To achieve this, the communicator 210 may include various wire or wireless communication modules. For example, the communicator 210 may include at least one of a Wi-Fi communication module, a 3G mobile communication module, a 4G mobile communication module such as mobile WiMAX or WiBro module, a 4G LTE module, a short-distance communication module such as a Bluetooth module, an IrDA module, an NFC module, a Zigbee module, and the like, a wireless LAN module, and the like.

The controller 220 controls an overall operation of the user terminal apparatus 200. The controller 220 controls the communicator 210 to receive a message from the channel server 300 corresponding to the channel information. In this example, the message may be a push message as described above. The user terminal apparatus 200 may be connected to a plurality of channel servers, and may subscribe to the push message.

The controller 220 controls the communicator 210 to transmit the terminal information of the user terminal apparatus 200 to the address server 400. The terminal information includes information of a feature of the user terminal apparatus 200. For example, the terminal information may include at least one of location information of the user terminal apparatus 200, information of a device of the user terminal apparatus 200, information of an application installed in the user terminal apparatus 200, setting information of the user terminal apparatus 200, user information of the user terminal apparatus 200, and log information of the user terminal apparatus 200.

The controller 220 includes a hardware configuration including an MPU or a CPU, a cache memory, a data bus, and the like, an operating system, and a software configuration of an application that performs the above-described operation. A control command for respective elements for the operation of the user terminal apparatus 200 may be read from a memory according to a system clock, and an electric signal may be generated based on the read control command to operate the respective elements of hardware.

The above-described operation of the controller 220 may be included as a function of the operating system, or may be implemented as an application. When the operation of the controller 220 is included as a function of the operating system, the operating system shifts an instruction stored in a storage to the memory, performs memory scheduling, and processes a process based on a priority. When the operation of the controller 220 is implemented as an application, an application stored in the storage is executed and loaded into the memory, and the above-described operation is performed.

In addition, the user terminal apparatus 200 may further include a storage. The storage may store the above-described terminal information, that is, the location information of the user terminal apparatus 200, the information of the device of the user terminal apparatus 200, the information of the application installed in the user terminal apparatus 200, the setting information of the user terminal apparatus 200, the user information of the user terminal apparatus 200, and the log information of the user terminal apparatus 200.

The storage may be implemented as various technical devices. For example, the storage may include a memory such as a Read Only Memory (ROM) or a Random Access Memory (RAM), a Hard Disk Drive (HDD), a Blu-ray disk (BD), and the like. The memory may use an Electronically Erasable and Programmable ROM (EEPROM), or a non-volatile memory such as a non-volatile RAM, but does not preclude use of a volatile memory such as a static RAM or a dynamic RAM. In the example of the HDD, a compact hard disk of 1.8 inches or less, which is mountable in the user terminal apparatus 200, may be used.

In addition, the user terminal apparatus 200 may further include an outputter configured to output the received message. For example, the outputter may output at least one of an audio signal, a video signal, and a vibration signal. To achieve this, the outputter may include an audio decoder, an output device such as a speaker, a video processor, a display, a vibration actuator, and the like.

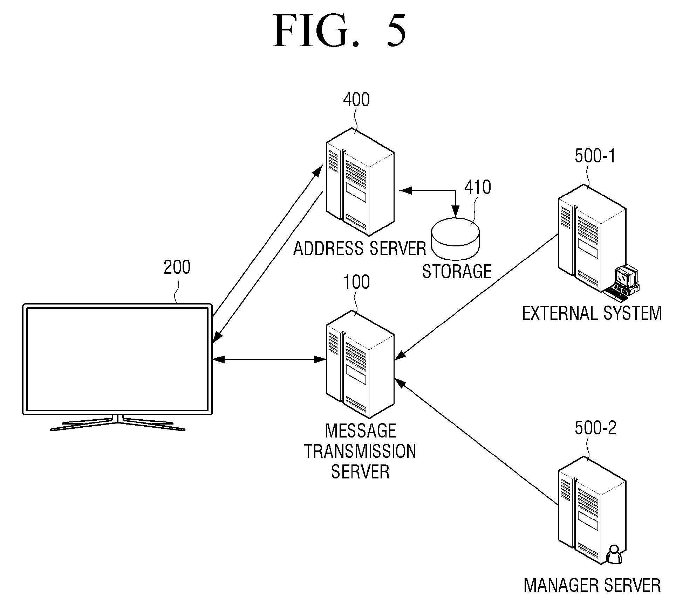

FIG. 5 is a view showing a configuration of the message transmission system 1000-2 according to an exemplary embodiment.

As shown in FIG. 5, the user terminal apparatus 200 transmits terminal information of the user terminal apparatus 200 to the address server 400, and the address server 400 sets channel information based on the terminal information, and assigns a channel server to the set channel information. The address server 400 stores the channel information and information of the assigned channel server in a storage 410. The address server 400 transmits the set channel information and the information of the assigned channel server to the user terminal apparatus 200. The address server 400 also transmits the set channel information and the information of the channel server to the message transmission server 100. In response to a message being received from an external system 500-1 or a manager server 500-2, the message transmission server 100 selects a channel server to broadcast the received message, based on the received message, and transmits the received message to the selected channel server.

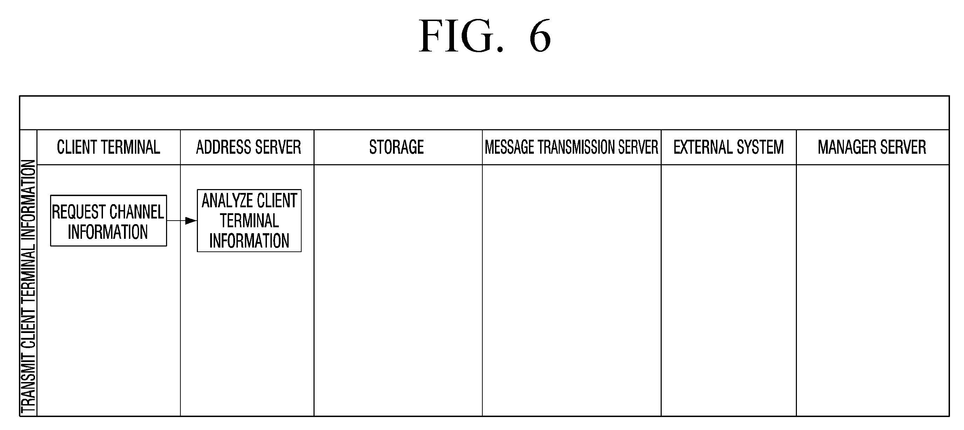

FIGS. 6 to 12 are swimlane diagrams showing a message transmission process according to an exemplary embodiment.

As shown in FIG. 6, the user terminal apparatus 200 (a client terminal 200) requests channel information by transmitting client terminal information of the client terminal 200 to the address server 400. The address server 400 analyzes the client terminal information received from the client terminal 200, and sets channel information corresponding to the analyzed client terminal information. When the channel information corresponding to the analyzed client terminal information is pre-set, the address server 400 may transmit the pre-set channel information to the client terminal 200. In this example, the address server 400 may include the client terminal information of the client terminal 200 in the pre-set channel information, and store the pre-set channel information in a storage.

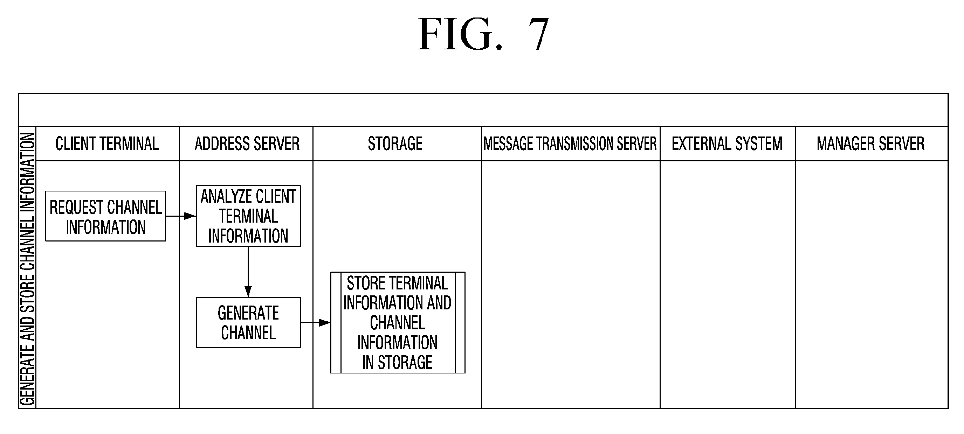

As shown in FIG. 7, when there is no channel information corresponding to the analyzed client terminal information, the address server 400 newly set the channel information corresponding to the analyzed client terminal information. The address server 400 may assign a new channel server to the newly-set channel information. In addition, the address server 400 may store the client terminal information, the newly-set channel information, and information of the newly-assigned channel server in the storage. The newly-set channel information and the information of the newly-assigned channel server may be provided to the message transmission server 100.

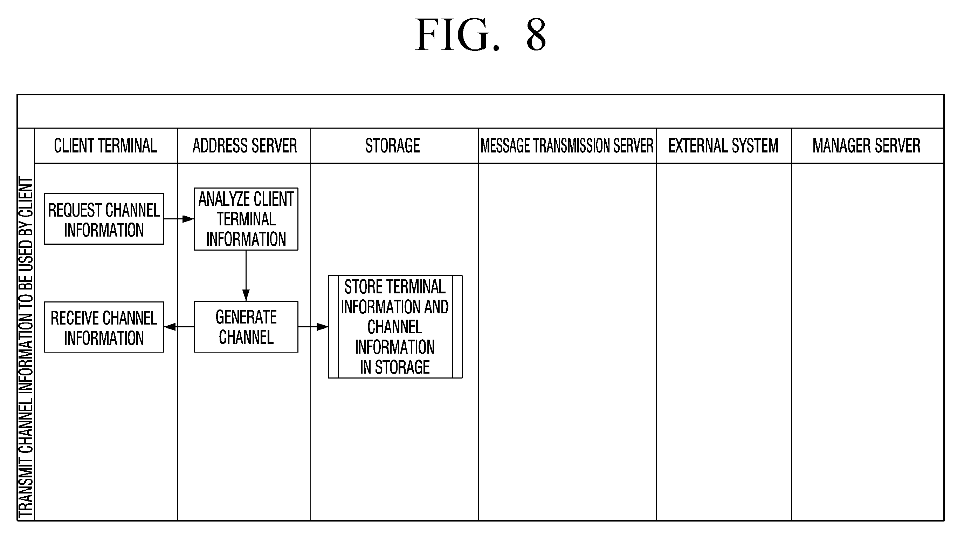

As shown in FIG. 8, the address server 400 transmits the pre-set or newly-set channel information to the client terminal 200 to be used by the client terminal 200.

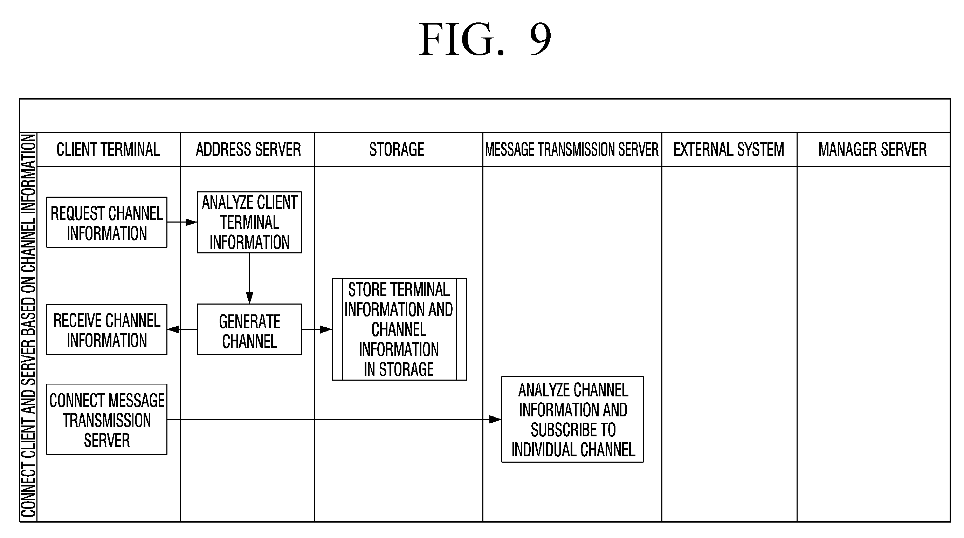

As shown in FIG. 9, the client terminal 200 establishes connection with a channel server corresponding to the channel information received from the address server 400. When the client terminal 200 is connected with the message transmission server 100, the message transmission server 100 is configured to perform a function of the channel server. In other words, the client terminal 200 and the message transmission server 100 analyze the channel information, and subscribe to an individual channel of the channel information. The client terminal 200 receives a message from the subscribed channel.

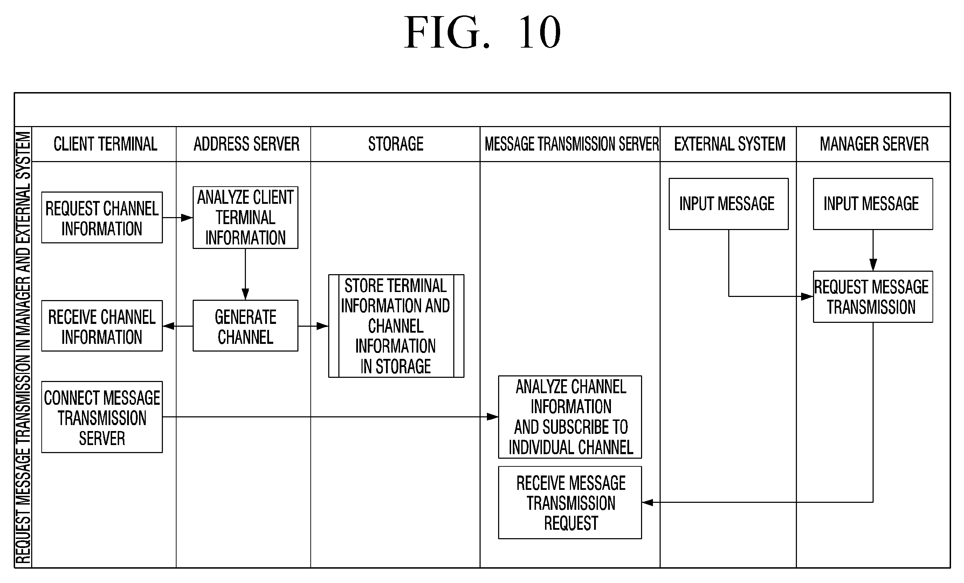

As shown in FIG. 10, the message transmission server 100 may receive a message transmission request from the external system 500-1 and the manager server 500-2, and the message transmission request requests that a message be sent to a client terminal. The message may be input through the external system 500-1 and the manager server 500-2 by a user. Also, each of the external system 500-1 and the manager server 500-2 may generate the message according to a pre-set rule. The input or generated message includes information of a channel through which the message is subscribed to.

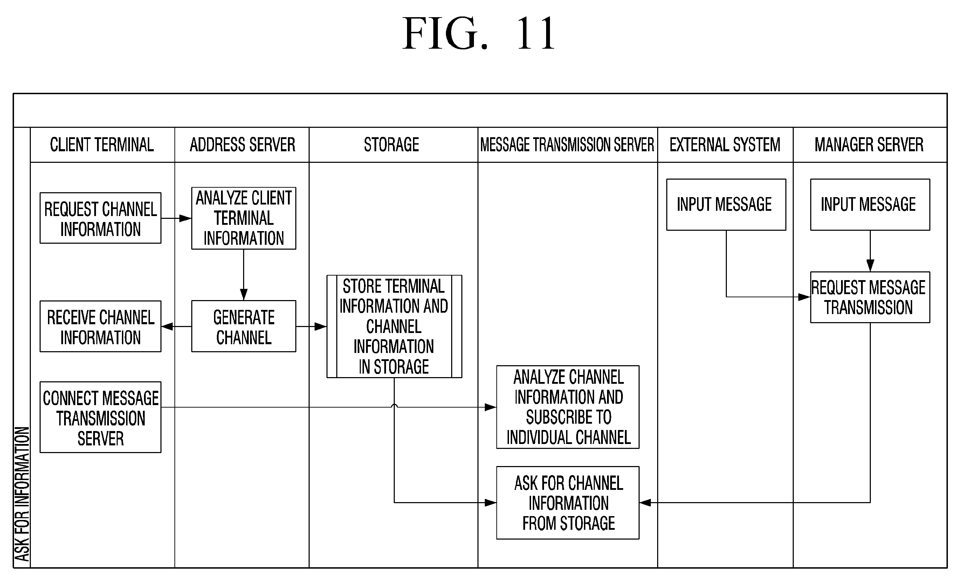

As shown in FIG. 11, the message transmission server 100 asks for and retrieves channel information from the storage or the address server 400. The storage or the address server 400 may transmit, to the message transmission server 100, the channel information corresponding to the information of the channel through which the message is subscribed to, and corresponding information of a channel server. Alternatively, the message transmission server 100 may store and manage the information by itself. In this example, the message transmission server 100 may identify the channel server directly without requesting the address server 400. The message may be forwarded to the identified channel server. As described above, the message transmission server 100 may not transmit the message to the identified channel server, and may be configured to perform a function of the identified channel server.

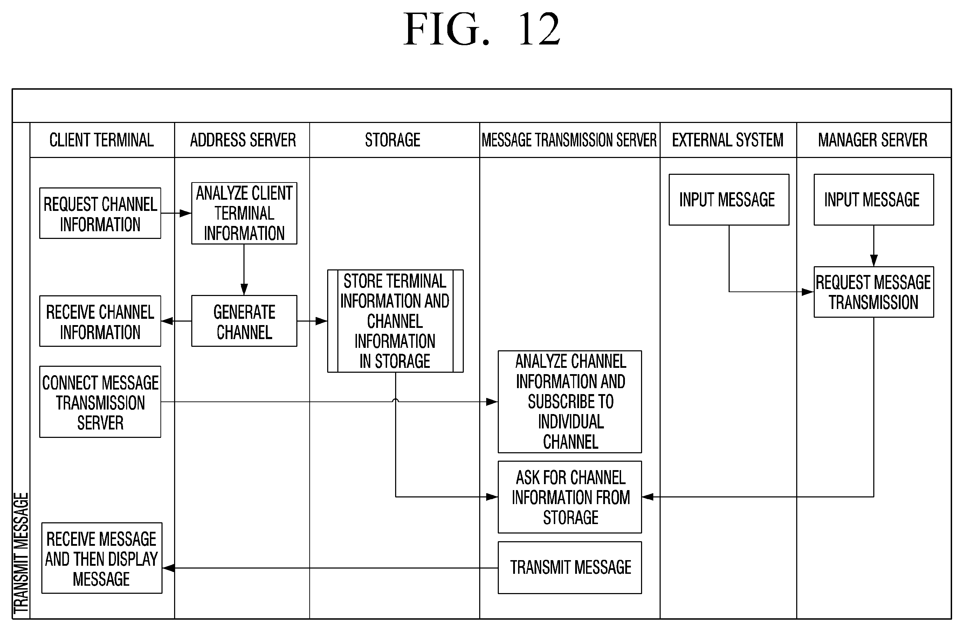

As shown in FIG. 12, the channel server or the message transmission server 100 broadcasts the received message to the client terminal 200 that belongs to the channel through which the message is subscribed to, based on the retrieved channel information. The client terminal 200 receives the message, and outputs and/or displays the received message.

Hereinafter, a method for transmitting a message according to exemplary embodiments will be explained.

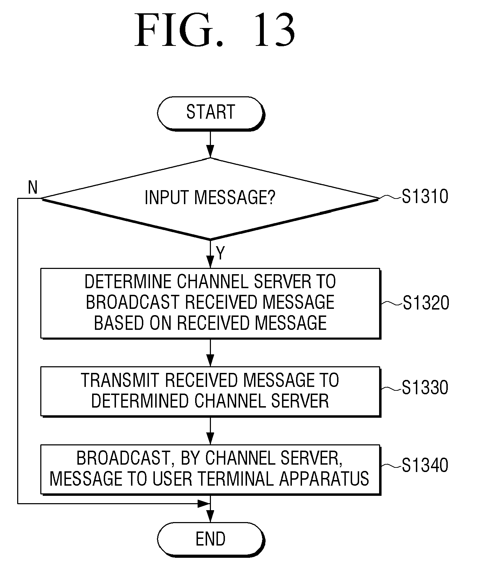

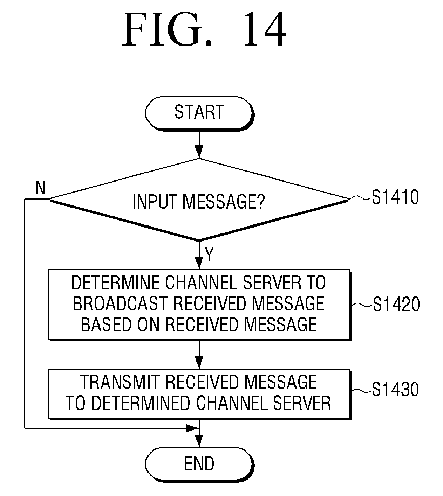

FIGS. 13 and 14 are flowcharts showing a method for transmitting a message according to exemplary embodiments.

Referring to FIG. 13, the method for transmitting a message of a message transmission system according to an exemplary embodiment includes: in response to an input message being determined to be received (S1310-Y), selecting, by a message transmission server, a channel server to broadcast the received message, based on the received message (S1320), transmitting, by the message transmission server, the received message to the selected channel server (S1330), and broadcasting, by the channel server, the message to a user terminal apparatus (S1340).

The selecting the channel server may include, in response to the input message being determined to be received, selecting the channel server to broadcast the received message based on channel information included in the received message.

In addition, the message may be input through an external apparatus, and the method for transmitting a message may further include receiving, by the message transmission server, the input message from the external apparatus.

The method for transmitting the message may further include receiving, by an address server, terminal information from the user terminal apparatus, and setting, by the address server, channel information corresponding to the received terminal information.

In addition, the user terminal apparatus may receive the message transmitted from the message transmission server through the channel server corresponding to the set channel information.

In this example, the terminal information may be at least one of location information of the user terminal apparatus, device information of the user terminal apparatus, information of an application installed in the user terminal apparatus, setting information of the user terminal apparatus, user information of the user terminal apparatus, and log information of the user terminal apparatus.

In addition, the setting the channel information may include, in response to the channel information corresponding to the received terminal information being pre-set, transmitting the pre-set channel information to the user terminal apparatus. The setting the channel information may further include, in response to there being no channel information corresponding to the received terminal information, setting new channel information corresponding to the received terminal information, and transmitting the new channel information to the user terminal apparatus.

Referring to FIG. 14, a method for transmitting a message of a message transmission server according to an exemplary embodiment includes, in response to an input message being determined to be received (S1410-Y), selecting a channel server to broadcast the received message, based on the received message (S1420), and transmitting the received message to the selected channel server (S1430).

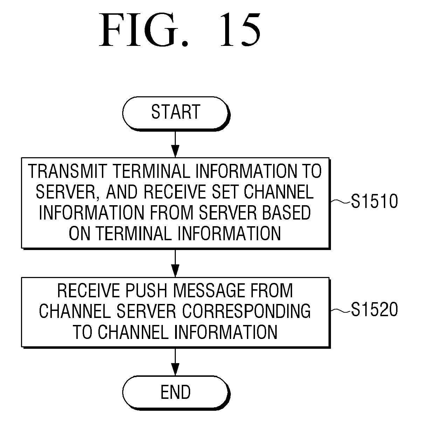

FIG. 15 is a flowchart showing a method for receiving a message according to an exemplary embodiment.

Referring to FIG. 15, a method for receiving a message of a user terminal apparatus according to an exemplary embodiment includes transmitting terminal information to a server and receiving channel information set based on the terminal information from the server (S1510), and receiving a push message from a channel server corresponding to the channel information (S1520).

For example, the user terminal apparatus may be at least one of a digital television, a smartphone, smart glasses, a smart watch, a cellular phone, a tablet PC, an MP3 player, a PMP, a laptop computer, and the like.

In addition, the exemplary embodiments may also be implemented through computer-readable code and/or instructions on a medium, e.g., a non-transitory computer-readable medium, to control at least one processing element to implement any above-described embodiments. The medium may correspond to any medium or media which may serve as a storage and/or perform transmission of the computer-readable code.

The computer-readable code may be recorded and/or transferred on a medium in a variety of ways, and examples of the medium include recording media, such as magnetic storage media (e.g., ROM, floppy disks, hard disks, and the like) and optical recording media (e.g., compact disc read only memories (CD-ROMs) or digital versatile discs (DVDs)), and transmission media such as Internet transmission media. Thus, the medium may have a structure suitable for storing or carrying a signal or information, such as a device carrying a bitstream according to one or more exemplary embodiments. The medium may also be on a distributed network, so that the computer-readable code is stored and/or transferred on the medium and executed in a distributed fashion. Furthermore, the processing element may include a processor or a computer processor, and the processing element may be distributed and/or included in a single device.

In addition, the above-described message transmitting and receiving methods may be embedded in a hardware IC chip, in a form of embedded software, and included as a configuration of the above-described message transmission system 1000-1 or 1000-2.

According to various exemplary embodiments as described above, client terminals may be grouped, and a message may be transmitted to a group. Channel information may be configured to be variable such that a manager can change the channel information, and thus various transmission groups may be generated. In addition, even when a number of client terminals increases, a time of transmitting a message to a channel can be minimized.

The foregoing exemplary embodiments and advantages are merely exemplary and are not to be construed as limiting. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A message transmission system (1000-1; 1000-2) comprising:
a message transmission server (100) configured to, in response to a message being received, select a channel server (300) to broadcast the received message, based on the received message, and transmit the received message to the determined channel server; and
the channel server configured to receive the message transmitted from the message transmission server, and broadcast the transmitted message to a user terminal apparatus (200).

2. The message transmission system of claim 1, wherein the message transmission server (100) is configured to, in response to the message being received, select the channel server (300) to broadcast the received message according to channel information included in the received message.

3. The message transmission system of claim 1 or 2, further comprising an external apparatus (500) configured to input the message.

4. The message transmission system of any one of claims 1 to 3, further comprising an address server (400) configured to receive terminal information from the user terminal apparatus (200), and set channel information based on the received terminal information.

5. The message transmission system of claim 4, wherein the user terminal apparatus (200) is configured to receive the message transmitted from the message transmission server (100) from a said channel server (300) corresponding to the set channel information.

6. The message transmission system of claim 4 or 5, wherein the terminal information is at least one of location information of the user terminal apparatus (200), device information of the user terminal apparatus, information of an application installed in the user terminal apparatus, setting information of the user terminal apparatus, user information of the user terminal apparatus, and log information of the user terminal apparatus.

7. The message transmission system of any one of claims 4 to 6, wherein the address server (400) is configured to, in response to channel information corresponding to the received terminal information being pre-set, transmit the pre-set channel information to the user terminal apparatus (200), and, in response to there being no channel information corresponding to the received terminal information, set channel information corresponding to the received terminal information, and transmit the set channel information to the user terminal apparatus.

8. A method for transmitting a message in a message transmission system, the method comprising:
in response to a message being received, selecting a channel server to broadcast the received message, based on the received message;
transmitting the received message to the selected channel server; and
broadcasting, by the channel server, the message to a user terminal apparatus.

9. The method of claim 8, wherein the selecting the channel server comprises, in response to the message being received, selecting the channel server to broadcast the received message according to channel information included in the received message.

10. The method of claim 8 or 9, wherein the message is input through an external apparatus, and
the input message is received from the external apparatus.

11. The method of any one of claims 8 to 10, further comprising receiving terminal information from the user terminal apparatus, and setting channel information based on the received terminal information.

12. The method of claim 11, wherein the user terminal apparatus is configured to receive the message transmitted from a message transmission server from a channel server corresponding to the set channel information.

13. The method of claim 11 or 12, wherein the terminal information is at least one of location information of the user terminal apparatus, device information of the user terminal apparatus, information of an application installed in the user terminal apparatus, setting information of the user terminal apparatus, user information of the user terminal apparatus, and log information of the user terminal apparatus.

14. The method of any one of claims 11 to 13, wherein the setting the channel information comprises:
in response to channel information corresponding to the received terminal information being pre-set, transmitting the pre-set channel information to the user terminal apparatus; and
in response to there being no channel information corresponding to the received terminal information, setting channel information corresponding to the received terminal information, and transmitting the set channel information to the user terminal apparatus.
